# DEMANDE DE BREVET EUROPEEN

(11) **EP 4 414 680 A1**
(43) Date de publication de la demande: **14.08.2024**
(21) Numéro de dépôt: 23203302.7
(22) Date de dépôt: 12.10.2023
(51) Int. Cl.: G01L 19/12, A61M 5/168, A61G 12/00, G01G 17/04

(54) **INSTALLATION D'ACHEMINEMENT DE FLUIDES MÉDICAUX INCLUANT UN BOÎTIER DE SURVEILLANCE À PARAMÉTRAGE FACILITÉ**

(30) Priorité: 09.02.2023 FR 2301228
(71) Demandeur: Air Liquide Medical Systems, 92182 Antony Cedex (FR); Air Liquide Santé France, 75007 Paris (FR)
(72) Inventeur: BUSSON, Thibaut, 92182 Antony Cedex (FR); BONNET-EYMARD, Paul, 92220 Bagneux (FR)
(74) Mandataire: Air Liquide

(57) **Abrégé**

L'invention concerne une installation (1) d'acheminement des fluides médicaux dans un établissement hospitalier comprenant des lignes d'acheminement de fluide (2-1, 2-2, 2-3) comprenant chacune un capteur de pression (5) et un boîtier de surveillance de fluide (3) comprenant plusieurs voies de surveillance (16-i) raccordées chacune électriquement à des capteur de pression (5), des moyens de pilotage (4), des moyens d'alarme, et des moyens de mémorisation (4-2) pour mémoriser des ensembles (Ei) de paramètres de configuration choisis parmi un type de fluide, un type de capteur de pression, un seuil de pression basse et un seuil de pression haute. Des moyens de sélection (18) permettent à un opérateur de choisir l'un desdits ensembles (Ei) de paramètres de configuration mémorisés et de l'associer spécifiquement à l'une des voies de surveillance (16). Boîtier de surveillance de fluide (3) de l'installation (1).

## Description

L'invention concerne une installation d'acheminement de fluide dans un établissement hospitalier équipée d'un boitier ou appareil de surveillance de fluides médicaux, tels les gaz ou le vide médical (i.e. dépression), comprenant plusieurs voies de surveillance paramétrées de manière spécifique dont la programmation ou paramétrage est facilitée, en particulier dans un établissement hospitalier, et un boitier utilisable dans une telle installation d'acheminement de fluide.

Les boîtiers de surveillance des fluides médicaux sont des éléments de sécurité obligatoires qui permettent de surveiller, i.e. monitorer, les réseaux de distribution des fluides médicaux, typiquement des lignes ou canalisations d'acheminement des gaz médicaux, tel de l'air, de l'oxygène ou du protoxyde d'azote (N₂O), voire du dioxyde de carbone (CO₂), ou du vide (i.e. dépression), agencés dans les établissements hospitaliers, tels les hôpitaux, cliniques ou analogues.

Un boîtier de surveillance est habituellement installé sur un mur, une paroi ou analogue, de l'établissement hospitalier considéré, par exemple dans la ou les zones de production des fluides médicaux et/ou à l'entrée d'un ou plusieurs services hospitaliers. Des capteurs de pression reliés aux différentes lignes du réseau de fluides médicaux à surveiller sont connectés électriquement au boîtier de surveillance, en particulier aux moyens de pilotage du boîtier auxquels les capteurs fournissent les mesures de pression opérées afin qu'elles y soient traitées informatiquement.

Chaque capteur de pression est relié à une voie de surveillance du boîtier de surveillance qui est paramétrée de manière spécifique. Plus précisément, afin d'assurer une surveillance correcte du réseau de fluides, il est indispensable de définir les paramètres caractérisant chaque voie de surveillance du boitier afin de pouvoir ensuite déclencher une alarme lorsqu'une anomalie est détectée, typiquement un franchissement de valeur-seuil de pression d'alerte par exemple.

Or, la programmation du boîtier varie en fonction des différents paramètres à surveiller, notamment en fonction du type de fluide surveillé (i.e. oxygène, air, protoxyde d'azote ou vide, i.e. dépression), du type de capteur (i.e. ses caractéristiques intrinsèques), des niveaux de pression à surveiller.... mais aussi en fonction de l'utilisation du boîtier, par exemple pour surveiller une production de fluides ou une alimentation en fluides.

Cette programmation ou paramétrage du boîtier se fait habituellement au moment de la mise en service du boîtier de surveillance, c'est-à-dire lors de son installation dans l'hôpital ou analogue. Parfois, une (re)programmation peut aussi être nécessaire après mise en service, par exemple après quelques mois, typiquement en cas de modifications faisant suite à une opération de maintenance ou analogue.

Dans tous les cas, il est impératif que le paramétrage de chaque voie de surveillance du boîtier soit réalisé correctement, en particulier lors de la mise en service du boîtier, afin d'assurer une conformité de l'installation globale, notamment en termes de sécurité. Ainsi, les seuils d'alarme doivent être réglés pour correspondre à des valeurs spécifiques de sécurité et d'utilisation.

Par ailleurs, les informations affichées sur l'écran du boîtier doivent être clairement compréhensibles par les utilisateurs, typiquement le personnel soignant, afin d'éviter les erreurs d'interprétation.

Actuellement, la programmation ou paramétrage du boitier se fait, voie par voie et paramètre par paramètre, au moment de la mise en service du boitier par l'installateur du réseau de fluide, à l'aide d'un ordinateur, d'une télécommande, d'une tablette numérique à écran tactile ou d'un téléphone multifonction (i.e. smartphone).

Or, de telles opérations de programmation ou paramétrage sont chronophages et engendrent des risques d'erreur importants sur les chantiers d'installation de réseaux de fluides médicaux car les installateurs sont spécialisés en plomberie ou analogue mais ont peu de compétences en électronique, c'est-à-dire en programmation informatique. Ils ne sont pas forcément à l'aise avec les paramétrages à réaliser, voire même, pour certains, non-habilités à intervenir dans les opérations de paramétrage d'un boîtier d'alarme.

Par ailleurs, US7356382 enseigne un boitier de contrôle d'une pompe d'infusion de médicament alimentée en fluide à infuser à un patient. Il comprend un capteur de pression. Un tel boitier n'est pas du tout adapté aux spécifications des installations « industrielles » d'acheminement des fluides dans les établissements hospitaliers, typiquement les réseaux de gaz médicaux ou de vide acheminant des gaz à des pressions de plusieurs bars, ou une dépression (i.e. du vide).

Un problème est dès lors de proposer une installation d'acheminement de fluides dans un établissement hospitalier améliorée, en particulier de pouvoir faciliter la programmation ou paramétrage d'un boitier de surveillance de fluide utilisé dans une telle installation d'acheminement de fluides agencée dans un établissement hospitalier, notamment lors de la mise en route du boitier, par exemple à la fin d'un chantier d'installation d'un réseau de fluides, typiquement de gaz médicaux et/ou de vide médical, afin d'éviter tout ou partie des problèmes susmentionnés.

Une solution de l'invention concerne alors une installation d'acheminement de fluide (i.e. un ou plusieurs fluides) dans un établissement hospitalier, comprenant un boitier ou appareil de surveillance de fluide, et des lignes d'acheminement de fluide comprenant chacune un capteur de pression.

De plus, le boitier de surveillance de fluide de l'installation comprend :
- plusieurs voies de surveillance comprenant chacune des moyens de raccordement électrique à un capteur de pression, les voies de surveillance étant reliées électriquement aux capteurs de pression, via les moyens de raccordement électrique et des liaisons électriques,
- des moyens de pilotage à processeur coopérant avec les voies de surveillance pour traiter des mesures de pression provenant des capteurs de pression,
- des moyens d'alarme commandés par les moyens de pilotage,
- des moyens de mémorisation configurés pour mémoriser plusieurs ensembles (Ei) de paramètres de configuration, où chaque ensemble (Ei) de paramètres de configuration comprend plusieurs paramètres de configuration choisis parmi un type de fluide, un type de capteur de pression, un seuil de pression basse et un seuil de pression haute, et
- des moyens de sélection configurés pour permettre à un opérateur de choisir au moins l'un desdits ensembles (Ei) de paramètres de configuration mémorisés et de l'associer spécifiquement à l'une des voies de surveillance.

Selon le mode de réalisation considéré, le boîtier ou appareil de l'installation selon l'invention peut comprendre l'une ou plusieurs des caractéristiques suivantes :
- les voies de surveillance comprennent des liaisons électriques reliant les moyens de pilotage aux moyens de raccordement électrique, par exemple des liaisons filaires, de type circuit imprimé ou autres .
- il comprend un coffret, c'est-à-dire une carcasse ou coque rigide externe, par exemple en polymère.
- les moyens de pilotage à processeur comprennent un ou plusieurs (micro)processeur(s).
- les moyens de pilotage comprennent une (ou des) carte électronique.
- le (ou les) (micro)processeur(s) sont agencés sur la (les) carte électronique.
- les moyens de mémorisation comprennent une mémoire informatique, telle une mémoire flash.
- les moyens de mémorisation sont agencés sur la (les) carte électronique.
- les moyens de pilotage et les moyens de mémorisation, notamment la (les) carte électronique, sont agencés dans le coffret.
- les moyens de pilotage sont configurés pour comparer les mesures de pression provenant des différentes voies de surveillance avec les seuils de pression basse et/ou de pression haute des paramètres de configuration associés aux différentes voies de surveillance et mémorisés par les moyens de mémorisation de données afin de déclencher une alarme sonore et/ou visuelle lorsqu'une pression excessive ou insuffisante est détectée.
- les moyens de pilotage sont configurés pour déterminer qu'une pression mesurée correspond à une pression excessive lorsque ladite pression mesurée est supérieure à un seuil de pression haute donné, i.e. mémorisé.
- les moyens de pilotage sont configurés pour déterminer qu'une pression mesurée correspond à une pression insuffisante lorsque ladite pression mesurée est inférieure à un seuil de pression basse donné, i.e. mémorisé.
- les moyens de raccordement électrique comprennent des connecteurs électriques ou analogues, tel qu'un bornier électrique ou analogue.
- les moyens de raccordement électrique comprennent des connecteurs électriques ou analogues, c'est-à-dire plusieurs emplacements de raccordement électrique.
- chaque emplacement de raccordement électrique est configuré pour y raccorder un capteur de pression.
- les moyens de raccordement électrique comprennent un bornier électrique à plusieurs emplacements de raccordement électrique, c'est-à-dire à plusieurs connecteurs électriques.
- il comprend de 2 à 10 voies de surveillance, de préférence de 3 à 8 voies de surveillance, par exemple 4 voies.
- les voies de surveillance sont agencées en parallèle les unes des autres.
- chaque ou les ensembles (Ei) de paramètres de configuration comprennent en tant que paramètre de configuration un type de fluide choisi parmi au moins l'oxygène, l'air ou le vide (i.e. dépression), typiquement de l'oxygène ou de l'air de qualité médicale.
- les lignes d'acheminement de fluide sont choisies parmi au moins une ligne d'oxygène, une ligne d'air et une ligne de vide.
- les lignes d'acheminement de fluide comprennent en outre une ligne de protoxyde d'azote (N₂O) et/ou une ligne de dioxyde de carbone (CO₂).
- l'ensemble (Ei) de paramètres de configuration comprend en outre en tant que paramètre de configuration un type de fluide choisi parmi N₂O et/ou CO₂.
- le boitier de surveillance de fluide et les lignes d'acheminement de fluide sont agencées au sein de l'établissement hospitalier, en particulier montés sur une ou des parois dudit établissement hospitalier, c'est-à-dire un mur, une cloison, un plafond ou autre.
- les ensembles (Ei) de paramètres de configuration comprennent en tant que paramètre de configuration, pour un gaz sous pression, un seuil de pression basse compris entre 3 et 7 bar abs et un seuil de pression haute compris entre 4.5 et 10 bar abs.
- les ensembles (Ei) de paramètres de configuration comprennent en tant que paramètre de configuration, pour du vide (dépression), un seuil de pression basse compris entre -0.8 et -0.3 bar abs et un seuil de pression haute compris entre -0.1 et 0.5 bar abs.
- les ensemble (Ei) de paramètres de configuration comprennent en tant que paramètre de configuration, un type de capteur choisi parmi un capteur 0 à 16 bar, un capteur 0 à 250 bars et un capteur 0 à -0,90 bar.
- alternativement, les ensemble (Ei) de paramètres de configuration comprennent en tant que paramètre de configuration, un type de capteur choisi parmi les capteurs tout ou rien.
- alternativement, les ensembles (Ei) de paramètres de configuration comprennent en tant que paramètre d'une source de production de gaz, un seuil de pression basse compris entre 15 et 25 bar abs, par exemple de l'ordre de 17 bar abs, ou un seuil de pression haute compris entre 110 et 150 bar abs, par exemple de l'ordre de 130 bar abs.
- les moyens de sélection sont configurés pour permettre à l'opérateur de choisir plusieurs ensembles (Ei) de paramètres de configuration mémorisés et d'associer lesdits ensembles (Ei) de paramètres de configuration spécifiquement à des voies de surveillance dédiées.
- les moyens de sélection comprennent un ou des boutons ou touches de sélection, ou analogue, permettant d'opérer des choix, des sélections, des réglages, des validations de choix ou de sélection, ou autres.
- les moyens de sélection sont portés par le boîtier, en particulier la carcasse.
- alternativement, les moyens de sélection sont agencés dans le boîtier, c'est-à-dire protégés dans la carcasse.
- il comprend des moyens d'affichage configurés pour afficher des données ou informations utiles à l'opérateur, en particulier les paramètres de configuration, les ensemble (Ei) de paramètres de configuration, les différentes voies, une ou des alarmes ou autres.
- les moyens d'affichage comprennent un écran d'affichage.
- l'écran d'affichage est en couleurs ou en noir et blanc.
- selon un mode de réalisation particulier, l'écran d'affichage peut être à dalle tactile.
- les moyens de pilotage sont configurés pour commander ou contrôler le ou les affichages sur les moyens d'affichage.
- les moyens de pilotage sont reliés électriquement aux moyens d'affichage, par exemple via une nappe électrique ou autre.
- les moyens d'alarme sont sonores et/ou visuels.
- les moyens d'alarme sont configurés pour émettre un (des) signal sonore, par exemple un signal audible émis par un dispositif à haut-parleur, de type buzzer, intégré au boîtier.
- alternativement, les moyens d'alarme sont configurés pour émettre un (des) signal visuel, par exemple une alerte visuelle affichée sur l'écran d'affichage ou un signal lumineux émis par une (ou des) diode (LED) du boîtier.
- il comprend des moyens d'alimentation électrique alimentant les éléments nécessitant du courant électrique pour fonctionner, notamment les moyens de pilotage et/ou les moyens d'affichage et/ou les moyens d'alarme.
- les moyens d'alimentation électrique comprennent des moyens de raccordement au secteur (110/220V), en particulier un ou des câbles d'alimentation électrique.
- les capteurs de pression fournissent des mesures de la pression ou dépression (i.e. vide) mesurées dans les lignes d'acheminement de fluide, aux moyens de pilotage qui traitent ces mesures afin de déclencher une alarme en cas de détection d'un problème, en particulier une pression excessive ou insuffisante.

L'invention concerne en outre un boitier de surveillance de fluide pour une installation d'acheminement de fluide agencée dans un établissement hospitalier, tel un hôpital, une clinique ou autre, en particulier un boitier d'une installation comme décrit ci-avant, comprenant :
- plusieurs voies de surveillance comprenant chacune des moyens de raccordement électrique à un capteur de pression, les voies de surveillance étant reliées électriquement aux capteurs de pression, via les moyens de raccordement électrique et des liaisons électriques,
- des moyens de pilotage à processeur(s) coopérant avec les voies de surveillance pour traiter des mesures de pression provenant des capteurs de pression,
- des moyens d'alarme commandés par les moyens de pilotage,
- des moyens de mémorisation configurés pour mémoriser plusieurs ensembles (Ei) de paramètres de configuration, où chaque ensemble (Ei) de paramètres de configuration comprend plusieurs paramètres de configuration choisis parmi un type de fluide, un type de capteur de pression, un seuil de pression basse et un seuil de pression haute, et
- des moyens de sélection configurés pour permettre à un opérateur de choisir au moins l'un desdits ensembles (Ei) de paramètres de configuration mémorisés et de l'associer spécifiquement à l'une des voies de surveillance.

Par ailleurs, le boitier de surveillance de fluide est configuré, c'est-à-dire conçu et adaptée, pour être utilisé (ou utilisable) dans une installation d'acheminement de fluide d'un établissement hospitalier afin de surveiller la ou les lignes d'acheminement de fluide de ladite installation d'acheminement de fluide.

De plus, l'invention porte aussi sur un procédé de paramétrage du boitier ou appareil de surveillance de fluide selon l'invention d'une installation d'acheminement de fluide selon l'invention, en particulier dans un établissement hospitalier, dans lequel un opérateur :
- choisit ou sélectionne, via les moyens de sélection du boîtier, des ensembles (Ei) de paramètres de configuration mémorisés au sein du boitier, en particulier des ensembles (Ei) de paramètres de configuration mémorisés sous forme de groupes (Gₙ), et
- associe spécifiquement les ensembles (Ei) de paramètres de configuration sélectionnés, en particulier au moins un groupe (Gₙ) de plusieurs ensemble (Ei) de paramètres de configuration, à toutes ou partie des voies de surveillance du boîtier.

De façon alternative, l'invention porte sur un procédé de raccordement du boîtier de surveillance de fluide selon l'invention aux capteurs de pression d'une installation d'acheminement de fluide selon l'invention, en particulier dans un établissement hospitalier, dans lequel:
- on raccorde (i.e. un opérateur), au moyen de liaisons électriques, successivement plusieurs capteurs de pression aux moyens de raccordement électrique du boîtier de surveillance de fluide, lesdits moyens de raccordement électrique comprenant plusieurs emplacements de raccordement pour y raccorder les capteurs (tel un bornier à plusieurs emplacements), et
- les ensembles (Ei) de paramètres de configuration mémorisés au sein du boîtier sont automatiquement et spécifiquement associés aux voies de surveillance du boîtier reliées électriquement aux emplacements de raccordement auxquels des capteurs de pression ont été raccordés.

Autrement dit, les ensembles (Ei) de paramètres de configuration ou groupe (Gₙ) de plusieurs ensemble (Ei) de paramètres de configuration sont automatiquement sélectionnés par le boîtier au fur et à mesure du raccordement des capteurs de pression par l'opérateur car chaque voie, lorsqu'elle est raccordée, est dédiée à un ensembles (Ei) de paramètres de configuration donné prédéfini.

De préférence, les ensembles (Ei) de paramètres de configuration comprennent en tant que paramètre de configuration :
- pour un gaz sous pression, un seuil de pression basse compris entre 3 et 7 bar abs et un seuil de pression haute compris entre 4.5 et 10 bar abs,
- pour du vide (dépression), un seuil de pression basse compris entre -0.8 et -0.3 bar abs et un seuil de pression haute compris entre -0.1 et 0.5 bar abs, et/ou
- un type de capteur choisi parmi un capteur 0 à 16 bar, un capteur 0 à 250 bars et un capteur 0 à -0,90 bar.

L'invention va maintenant être mieux comprise grâce à la description détaillée suivante, faite à titre illustratif mais non limitatif, en référence aux figures annexées parmi lesquelles :
Fig. 1 schématise un mode de réalisation d'une installation d'acheminement de fluide comprenant un boîtier de surveillance selon l'invention, et
Fig. 2 représente un schéma d'un mode de réalisation de la face avant d'un boîtier selon l'invention.

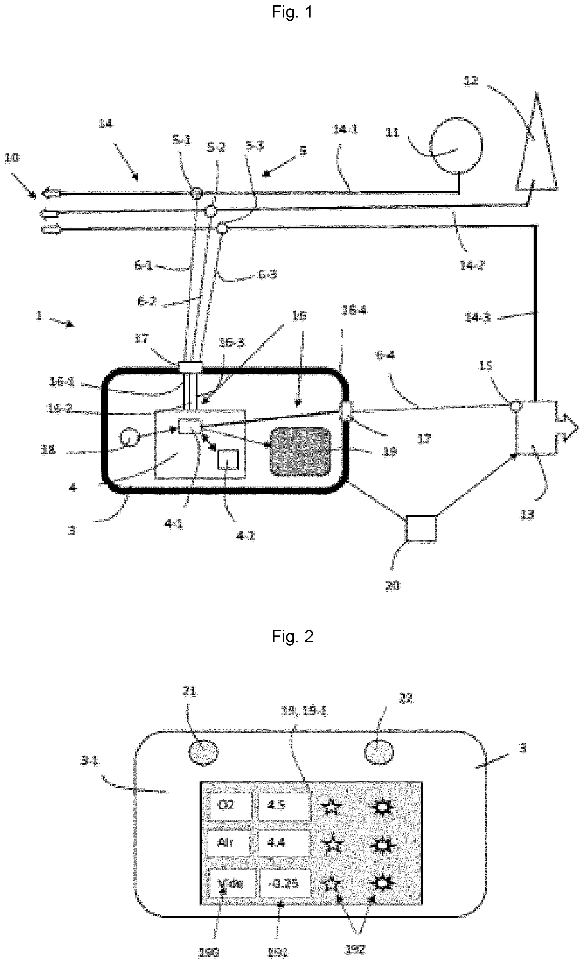

Fig. 1 schématise un mode de réalisation d'une installation 1 d'acheminement de fluide selon l'invention comprenant plusieurs lignes d'acheminement de fluide 14-1, 14-2, 14-3 faisant partie d'un réseau de canalisations 14 de fluides agencé au sein d'un établissement hospitalier, tel un hôpital, une clinique ou analogue. Par exemple, une ligne d'acheminement d'oxygène 14-1, une ligne d'acheminement d'air médical 14-2 et une ligne d'acheminement de vide 14-3, c'est-à-dire de dépression (i.e. < 1 atm).

Le réseau 14 de canalisations permet d'acheminer les fluides médicaux, i.e. ici des gaz et du vide (dépression), depuis leur site de production ou de stockage sur le site de l'établissement hospitalier, jusqu'à des prises de distribution murales 10 agencées dans leurs lieux d'utilisation au sein de l'établissement hospitalier, telles les salles de soins, d'opération ou de réveil, les urgences, les chambres ou autres.

Ainsi, l'air de qualité médicale peut être produit directement sur site au moyen d'une unité de type PSA air 12, comme décrit par EP-A-864818, et il en va de même du vide qui peut aussi être produit sur site au moyen d'une (ou plusieurs) pompe à vide 13, comme décrit par EP-A-1026567.

Par ailleurs, l'oxygène ou le protoxyde d'azote (N₂O) peuvent être produits hors site, avant d'y être amenés par camion-citerne ou analogue, où ils sont stockés dans des réservoirs de stockage 11, ou des bouteilles de gaz qui peuvent être agencées en cadre réunissant plusieurs bouteilles reliées entre elles. Alternativement, l'oxygène peut aussi être produit sur site par unité de type VSA O₂. De façon connue, une unité PSA (pressure swing adsorption) permet de produire du gaz par modulation de pression, alors qu'une unité VSA (vacuum swing adsorption) permet de produire du gaz par modulation de vide.

Les lignes d'acheminement de fluide 14-1, 14-2, 14-3 du réseau de canalisations 14 sont habituellement fixées sur les murs ou parois de l'établissement hospitalier. Il en va de même des prises murales 10 situées aux extrémités libres de ces lignes d'acheminement de fluide, comme décrit par EP-A-3719377.

L'installation 1 comprend par ailleurs un boitier de surveillance 3 du réseau 14 comprenant des moyens de pilotage 4 comprenant un (ou plusieurs) (micro) processeur(s) 4-1 mettant en oeuvre un ou des algorithmes, et configurés notamment pour traiter des mesures, informations, données, ou autres, et/ou déclencher une ou des alarmes comme expliqué ci-après.

Les moyens de pilotage 4 peuvent aussi être appelés unité de pilotage, unité ou moyens de traitement d'information, électronique embarquée ou analogue. Les moyens de pilotage 4 comprennent avantageusement des moyens de mémorisation 4-2 servant à mémoriser ou stocker des paramètres de configuration, des données ou d'autres informations.

Le boîtier ou appareil de surveillance 3 comprend un coffret périphérique qui est lui-aussi fixé à un mur ou une paroi de l'établissement hospitalier, lequel embarque les moyens de pilotage 4 et comprend par ailleurs plusieurs voies 16 ; 16-1... 16-4, c'est-à-dire des liaisons électriques, destinées au raccordement de moyens de mesure 5, typiquement des capteurs de pression 5-1, 5-2, 5-3 servant à fournir des mesures de pression mesurées ou déterminée par ces moyens de mesure 5, aux moyens de pilotage 4 qui les traitent. Eventuellement, on peut aussi prévoir un dispositif de surveillance 15 de la production de vide par la pompe à vide 13 ou par l'une des autres sources de gaz 11, 12, i.e. PSA ou autre.

Plus précisément, les capteurs de pression 5-1, 5-2, 5-3 faisant office de moyens de mesure 5 sont agencés sur les différentes lignes d'acheminement de fluide 14-1, 14-2, 14-3 du réseau 14 de manière à pouvoir mesurer la pression des fluides circulant dans ces différentes lignes 14-1, 14-2, 14-3.

Ces capteurs de pression 5-1, 5-2, 5-3 sont reliés électriquement aux moyens de pilotage 4 par les liaisons 6 électriques, tels des câbles électriques ou analogue, et des moyens de raccordement électrique, tels des connecteurs électriques, par exemple un bornier ou analogue comprenant plusieurs emplacements de raccordement, et afin de leur fournir les mesures de pression opérées, i.e. valeurs ou signaux. A titre d'exemple, on peut utiliser un capteur de pression analogique 0-16 bars de marque Huba^{®}.

De façon analogue, la pompe à vide 13 servant à produire le vide, c'est-à-dire la dépression servant à l'aspiration, peut être équipée d'un dispositif de surveillance 15, qui renvoie une synthèse des défauts de l'équipement (i.e. pannes ou anomalies), relié, lui aussi, aux moyens de pilotage 4, via une voie dédiée 6-4, pour leur fournir des informations de fonctionnement de la pompe 13 afin de pouvoir détecter tout dysfonctionnement de cette pompe à vide 13 et déclencher une (ou des) alarme en réponse à cette détection.

Les mesures de pression provenant des moyens de mesure 5 sont traitées informatiquement par les moyens de pilotage 4, en particulier par le (ou les) processeur(s) 4-1, pour détecter tout problème de pression ou dysfonctionnement éventuel du réseau 14, c'est-à-dire des lignes d'acheminement de fluide 14-1, 14-2, 14-3, ou de la pompe à vide 13, par exemple des pressions excessives ou insuffisantes, et déclencher ensuite une (des) alarme sonore ou visuelle en réponse à la détection par exemple d'une chute de pression dans l'une des conduites de gaz du réseau 14 ou un dysfonctionnement de la pompe à vide 13, afin d'alerter le personnel soignant et lui permettre de prendre des mesures appropriées.

Des moyens d'alimentation électrique 20, tel que le secteur (110/220 V), alimentent électriquement les différents composants de l'installation 1 ayant besoin de courant électrique pour fonctionner, en particulier les moyens de pilotage 4, les différents capteurs 5, le dispositif de surveillance 15, la pompe à vide 13....

Cependant, afin que les moyens de pilotage 4 puissent remplir leur fonction, il est impératif que le boîtier de surveillance 3 soit programmé ou paramétré correctement, lors de sa mise en service notamment, afin d'assurer une conformité de l'installation, notamment en termes de sécurité. En particulier, les seuils de pression d'alarme, c'est-à-dire les seuils de pression haute et basse, doivent être définis avec précision, ainsi que d'autres paramètres de configuration, comme expliqué ci-après.

Pour ce faire, conformément à la présente invention, chaque voie 16 du boîtier 3 est paramétrée au sein du boîtier de surveillance 3, c'est-à-dire que des paramètres de configuration spécifiques associés à chacune des différentes voies 16 sont mémorisés au sein des moyens de mémorisation 4-2.

Le paramétrage, c'est-à-dire les paramètres de configuration, des différentes voies 16 du boîtier de surveillance 3 va varier selon le fluide surveillé par chacune de ces voies 16 et/ou, éventuellement selon le type d'utilisation, par exemple surveillance de la production ou surveillance de l'alimentation d'un service.

En général, un boîtier de surveillance 3 d'une installation 1 selon l'invention peut comprendre jusqu'à 8 à 10 voies différentes.

Pour ce faire, on définit et on mémorise au sein des moyens de mémorisation 4-2, un ensemble (Ei) de plusieurs (i≥2) paramètres de configuration spécifiques, à savoir typiquement :
- le type de fluide, typiquement oxygène, air, vide, voire du protoxyde d'azote (N₂O), du CO₂ ou autre,
- les seuils haut et/ou bas de pression d'alarme correspond au type de fluide considéré,
- le type de capteur utilisé, c'est-à-dire les caractéristiques du capteur relié à la voie 16 considérée, et/ou
- de préférence, le type de service hospitalier alimenté par le fluide considéré, par exemple cardiologie......

Chaque ensemble (Ei) de paramètres de configuration est alors attribué spécifiquement à l'une ou l'autre des voies 16 considérées. Il est donc spécifique, (i.e. dédié et/ou associé) d'une des (i=4) voies 16, par exemple l'une des 4 voies 16 schématisées en Fig. 1.

Ainsi, on a par exemple :
- un premier ensemble de paramètres de configuration (E₁) est spécifique de la première voie 16-1 qui est reliée (via une première liaison électrique 6-1) au premier capteur de pression 5-1 mesurant la pression d'oxygène dans la ligne d'acheminement d'oxygène 14-1 alimentée par la source d'oxygène 11 ;
- un deuxième ensemble de paramètres de configuration (E₂) est spécifique de la deuxième voie 16-2 qui est reliée (via une deuxième liaison électrique 6-2) au deuxième capteur de pression 5-2 mesurant la pression d'air médical dans la ligne d'acheminement d'air médical 14-2 alimentée par la source d'air médical 12 ; et
- un troisième ensemble de paramètres de configuration (E₃) est spécifique de la troisième voie 16-3 qui est reliée (via une troisième liaison électrique 6-3) au troisième capteur de pression 5-3 mesurant la dépression (i.e. niveau de vide) dans la ligne d'acheminement de vide 14-3 reliée à la pompe à vide 13.

Les liaisons électriques 6-1 à 6-3 sont typiquement des câbles électriques ou analogues permettant d'acheminer les signaux de mesure, qu'ils soient analogiques ou numériques.

De même, la quatrième voie 6-4 est définie par un ensemble de paramètres de configuration spécifiques permettant une surveillance de production via un capteur de fonctionnement de la pompe à vide.

Les ensembles de paramètres de configuration (Ei) sont mémorisés dans les moyens de mémorisation 4-2 faisant préférentiellement partie des moyens de pilotage 4 et coopérant avec ceux-ci, telle une mémoire flash ou analogue.

A titre d'exemple, Tab. 1 ci-après donne des valeurs représentatives de plusieurs paramètres de tels ensembles de paramètres de configuration (E) mémorisés pour les différentes voies 16 (n°16-1 à 16-8) d'un boîtier de surveillance 3 à 8 voies.

**Tab. 1**

| Voie n° | Type de gaz | Type de capteur | Seuil de pression basse | Seuil de pression haute |
|---|---|---|---|---|
| 16-1 | O₂ | 0 à 16 bar | 3.8 bar | 5.8 bar |
| 16-2 | N₂O | 0 à 16 bar | 3.4 bar | 5 bar |
| 16-3 | Air médical | 0 à 16 bar | 3.6 bar | 5.4 bar |
| 16-4 | Air SEGA | 0 à 16 bar | 4 bar | 6 bar |
| 16-5 | Air 800 | 0 à 16 bar | 6.4 bar | 9.6 bar |
| 16-6 | CO₂ | 0 à 16 bar | 3.6 bar | 5.4 bar |
| 16-7 | Vide médical | 0 à -0.900 bar | -0.34 bar | 0 bar |
| 16-8 | Contacteur tout ou rien de la pompe à vide | Marche / Arrêt | - | - |

Comme on le voit, chaque voie 16-1 à 16-7 est associée à un ensemble de paramètres de configuration (Ei) comprenant un type de gaz, un type de capteur et des seuils de pression basse et haute définissant les niveaux ou pressions d'alerte ou d'alarme. Ainsi, en sélectionnant une voie donnée, les paramètres qui lui sont associés, sont immédiatement retrouvés dans les moyens de mémorisation 4-2, ce qui évite tout risque d'erreur qui peut se produire en cas de saisie manuelle.

La voie 16-8 est quant à elle associée au contacteur 15 de type tout ou rien de la pompe à vide 13 et sert à surveiller le bon fonctionnement de la production de vide, comme expliqué ci-avant.

L'opérateur peut réaliser les sélections via des moyens de sélection 18, tel qu'un ou des boutons, touches ou analogue, aménagées sur ou dans le boîtier 1 ou, dans le cas où les moyens d'affichage 19 comprennent un écran d'affichage à dalle tactile, qui affichent les sélections, les paramètres et d'une façon générale, toutes les informations et autres données utiles à l'opérateur.

D'une façon générale, les moyens d'affichage 19 sont pilotés par les moyens de pilotage, telle une carte électronique à microprocesseur qui porte aussi préférentiellement les moyens de mémorisation 4-2, telle une mémoire flash.

De plus, les ensembles de paramètres Eᵢ peuvent être avantageusement regroupés en groupes Gₙ (n>1) comprenant chacun plusieurs ensembles de paramètres (Eᵢ). Les groupes Gₙ sont aussi mémorisés par les moyens de mémorisation 4-2.

A titre d'exemple, Tab. 2 ci-après donne des exemples de groupes Gₙ basés sur des ensembles de paramètres Eᵢ.

**Tab. 2**

| Groupe Gn | G1 | G2 | G3 | G4 |
|---|---|---|---|---|
| E1 | x | x | | |
| E2 | x | x | x | x |
| E3 | x | | x | |
| E4 | | x | x | x |

Ainsi, lors de la mise en service du boîtier de surveillance 3 de l'installation 1 de Fig. 1, après avoir raccordé par exemple les voies 16 aux moyens de mesure 5, typiquement aux capteurs de pression 5-1 à 5-3, voire aussi au dispositif de surveillance 15 de la pompe à vide 13, comme expliqué ci-avant, l'opérateur n'a qu'à sélectionner au niveau du boitier de surveillance 3, via des moyens de sélection 18, tels un ou des boutons ou touches de sélection, le groupes Gₙ désiré parmi les groupes Gₙ.

Ceci permet à l'utilisateur de paramétrer rapidement, c'est-à-dire en une fois, toutes les voies 16 concernées auxquelles sont attribués les paramètres des ensembles de paramètres Eᵢ du groupe Gₙ sélectionné.

Par exemple, en sélectionnant le groupe G1, l'utilisateur va attribuer les ensembles de paramètres E1, E2, E3 aux 3 voies concernées, par exemple les voies 16-1 à 16-3 de Fig. 1.

L'invention permet donc d'éviter les erreurs de paramétrage lors de la mise en route du boîtier 3, en particulier lorsque l'opérateur sélectionne un groupe Gn formé de plusieurs ensembles de paramètres Eᵢ dédiés à des voies spécifiques 16 qui vont alors être paramétrées simultanément sur la base des paramètres mémorisés, ce qui évite les erreurs.

Fig. 2 représente un schéma d'un mode de réalisation de la face avant 3-1 d'un boîtier 3 selon l'invention, par exemple à coque ou carcasse rigide en polymère.

On voit qu'elle porte les moyens d'affichage 19, à savoir ici un écran 19-1 de visualisation d'informations, de préférence en couleurs. L'écran 19-1 affiche ici différentes informations, telles que :
le nom du fluide 190 de chaque voie, e.g. ici oxygène, air, vide...
la valeur de (dé)pression 191 mesurée pour chaque fluide (en bar),
un ou des pictogrammes 192 illustrant un état des différentes voies, en particulier pression « normale » ou « alarme » en cas de pression excessive ou insuffisante.

Par ailleurs, le boîtier 3 porte aussi, sur sa face avant 3-1, un bouton d'acquittement d'alarme 22 et un bouton de test 21 servant à vérifier le bon fonctionnement des moyens d'alerte, notamment du buzzer sonore ou des pictogrammes 192.

Le boîtier 3 selon l'invention est adapté à une utilisation dans une installation d'acheminement de fluide selon l'invention, telle celle de Fig. 1.

## Revendications

1. Installation (1) d'acheminement de fluide dans un établissement hospitalier, comprenant :
- un boitier de surveillance de fluide (3), et
- des lignes d'acheminement de fluide (2-1, 2-2, 2-3) comprenant chacune un capteur de pression (5),
**caractérisée en ce que** le boitier de surveillance de fluide (3) comprend :
- plusieurs voies de surveillance (16-i) comprenant chacune des moyens de raccordement électrique (17) à un capteur de pression (5), les voies de surveillance (16-i) étant reliées électriquement aux capteurs de pression (5), via les moyens de raccordement électrique (17) et des liaisons électriques (6-1 à 6-4),
- des moyens de pilotage (4) à processeur (4-1) coopérant avec les voies de surveillance (16-i) pour traiter des mesures de pression provenant des capteurs de pression (5),
- des moyens d'alarme commandés par les moyens de pilotage (4),
- des moyens de mémorisation (4-2) configurés pour mémoriser plusieurs ensembles (Ei) de paramètres de configuration, où chaque ensemble (Ei) de paramètres de configuration comprend plusieurs paramètres de configuration choisis parmi un type de fluide, un type de capteur de pression, un seuil de pression basse et un seuil de pression haute, et
- des moyens de sélection (18) configurés pour permettre à un opérateur de choisir au moins l'un desdits ensembles (Ei) de paramètres de configuration mémorisés et de l'associer spécifiquement à l'une des voies de surveillance (16).

2. Installation selon la revendication 1, **caractérisée en ce que** les voies de surveillance (16-i) comprennent des liaisons électriques reliant les moyens de pilotage (4) aux moyens de raccordement électrique (17).

3. Installation selon l'une des revendications précédentes, **caractérisée en ce que** les moyens de pilotage (4) sont configurés pour comparer les mesures de pression provenant des différentes voies de surveillance (16-i) avec les seuils de pression basse et/ou de pression haute des paramètres de configuration associés aux différentes voies de surveillance (16-i) et mémorisés par les moyens de mémorisation de données (4-2) afin de déclencher une alarme sonore et/ou visuelle lorsqu'une pression excessive ou insuffisante est détectée.

4. Installation selon l'une des revendications précédentes, **caractérisée en ce qu'**il comprend de 2 à 10 voies de surveillance (16-i), de préférence de 3 à 8 voies de surveillance (16-i).

5. Installation selon la revendication 1, **caractérisée en ce que** les lignes d'acheminement de fluide (2-1, 2-2, 2-3) sont choisies parmi au moins une ligne d'oxygène, une ligne d'air et une ligne de vide.

6. Installation selon la revendication 1, **caractérisée en ce que** chaque ensemble (Ei) de paramètres de configuration comprend en tant que paramètre de configuration un type de fluide choisi parmi l'oxygène, l'air et le vide.

7. Installation selon la revendication 1, **caractérisée en ce qu'**il comprend des moyens d'affichage (19), en particulier un écran d'affichage.

8. Installation selon la revendication 1, **caractérisée en ce que** les moyens de sélection (18) sont configurés pour permettre à l'opérateur de choisir plusieurs ensembles (Ei) de paramètres de configuration mémorisés et d'associer lesdits ensembles (Ei) de paramètres de configuration spécifiquement à des voies de surveillance (16) dédiées.

9. Installation selon l'une des revendications précédentes, **caractérisée en ce que** les ensembles (Ei) de paramètres de configuration sont mémorisés sous forme de groupes (Gₙ), chaque groupe (Gₙ) comprenant plusieurs ensembles de paramètres de configuration (Ei).

10. Installation selon la revendication 1, **caractérisée en ce que** les lignes d'acheminement de fluide (2-1, 2-2, 2-3) comprennent en outre une ligne de N₂O et/ou une ligne de CO₂.

11. Installation selon l'une des revendications 1 ou 5, **caractérisée en ce que** l'ensemble (Ei) de paramètres de configuration comprend en outre en tant que paramètre de configuration un type de fluide choisi parmi N₂O et/ou CO₂.

12. Installation selon l'une des revendications, **caractérisée en ce que** le boitier de surveillance de fluide (3) et la ou les lignes d'acheminement de fluide (2-1, 2-2, 2-3) sont agencées au sein de l'établissement hospitalier, en particulier montés sur une ou des parois dudit établissement hospitalier.

13. Boitier de surveillance de fluide (3) comprenant :
- plusieurs voies de surveillance (16-i) comprenant chacune des moyens de raccordement électrique (17) à un capteur de pression (5), les voies de surveillance (16-i) étant reliées électriquement aux capteurs de pression (5), via les moyens de raccordement électrique (17) et des liaisons électriques (6-1 à 6-4),
- des moyens de pilotage (4) à processeur (4-1) coopérant avec les voies de surveillance (16-i) pour traiter des mesures de pression provenant des capteurs de pression (5),
- des moyens d'alarme commandés par les moyens de pilotage (4),
- des moyens de mémorisation (4-2) configurés pour mémoriser plusieurs ensembles (Ei) de paramètres de configuration, où chaque ensemble (Ei) de paramètres de configuration comprend plusieurs paramètres de configuration choisis parmi un type de fluide, un type de capteur de pression, un seuil de pression basse et un seuil de pression haute, et
- des moyens de sélection (18) configurés pour permettre à un opérateur de choisir au moins l'un desdits ensembles (Ei) de paramètres de configuration mémorisés et de l'associer spécifiquement à l'une des voies de surveillance (16),
**caractérisé en ce qu'**il est configuré pour être utilisé dans une installation (1) d'acheminement de fluide d'un établissement hospitalier selon l'une des revendications précédentes afin de surveiller la ou les lignes d'acheminement de fluide (2-1, 2-2, 2-3) de ladite installation (1) d'acheminement de fluide.

14. Procédé de paramétrage du boitier de surveillance de fluide (3) d'une installation (1) d'acheminement de fluide selon l'une des revendications 1 à 11, dans lequel un opérateur :
a) choisit ou sélectionne, via les moyens de sélection (18) du boîtier (3), des ensembles (Ei) de paramètres de configuration mémorisés au sein du boîtier (3), et
b) associe spécifiquement les ensembles (Ei) de paramètres de configuration sélectionnés, en particulier au moins un groupe (Gₙ) de plusieurs ensemble (Ei) de paramètres de configuration, à toutes ou partie des voies de surveillance (16) du boîtier (3).

15. Procédé selon la revendication 13, **caractérisé en ce qu'**à l'étape a), l'opérateur choisit ou sélectionne, via les moyens de sélection (18) du boîtier (3), des ensembles (Ei) de paramètres de configuration mémorisés sous forme de groupes (Gₙ).

16. Procédé selon l'une des revendications 13 ou 14, **caractérisé en ce que** les ensembles (Ei) de paramètres de configuration comprennent en tant que paramètre de configuration :
- pour un gaz sous pression, un seuil de pression basse compris entre 3 et 7 bar abs et un seuil de pression haute compris entre 4.5 et 10 bar abs,
- pour du vide (dépression), un seuil de pression basse compris entre -0.8 et -0.3 bar abs et un seuil de pression haute compris entre -0.1 et 0.5 bar abs, et/ou
- un type de capteur choisi parmi un capteur 0 à 16 bar, un capteur 0 à 250 bars et un capteur 0 à -0,90 bar.
